# NEW EUROPEAN PATENT SPECIFICATION

(11) **EP 2 725 057 B2**
(45) Date of publication and mention of the opposition decision: **24.08.2022**
(45) Mention of the grant of the patent: 11.09.2019
(21) Application number: 12007305.1
(22) Date of filing: 24.10.2012
(51) Int. Cl.: C08K 3/22, C08K 3/26, C08K 5/00, C08K 5/098, C08K 5/13, C08K 5/1545, C08K 5/51

(54) **Use of an acid scavenger to increase the resistance of a polyolefin composition against disinfectant containing water**
Verwendung eines Säure-Scavengers zur Erhöhung des Widerstandes einer Polyolefinzusammensetzung gegen Wasser mit einem Desinfektionsmittel
Utilisation d'un épurateur acide afin d'augmenter la résistance d'une composition de polyoléfine contre un désinfectant contenant de l'eau

(43) Date of publication of application: 30.04.2014
(73) Proprietor: Borealis AG, 1020 Vienna (AT)
(72) Inventor: Hjertberg, Thomas, 45691 Kungshamn (SE); Oderkerk, Jeroen, 44452 Stenungsund (SE); Costa, Francis, 4040 Linz (AT); Tran, Anh Tuan, 4222 Langenstein (AT)
(74) Representative: Kador & Partner PartG mbB

(56) References cited:
- EP-A1- 0 124 664
- EP-A1- 2 133 367
- EP-A1- 2 199 327
- EP-A1- 2 199 328
- EP-A1- 2 361 951
- EP-A1- 2 361 951
- EP-A1- 2 725 057
- WO-A1-2010/149607
- WO-A1-2013/036581
- JP-A- 2002 121 537
- US-A1- 2011 257 311
- US-A1- 2012 000 538
- DATABASE WPI Week 200415 Thomson Scientific, London, GB; AN 2004-146866 -& JP 2002 121537 A (KAISUI KAGAKU KENKYUSHO KK) 26 April 2002 (2002-04-26)
- "Plastic Additives: an A-Z Reference", edited by Geoffrey Pritchard, 1997, pages 43-48

## Description

The present invention relates to the use of an acid scavenger, wherein the acid scavenger is hydrotalcit, in combination with 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) to increase the resistance of a polyolefin composition against chlorine dioxide containing water. The present invention further relates to a method for transporting water containing chlorine dioxide comprising the step of conveying the water through a pipe comprising a polyolefin composition, the polyolefin composition comprising an acid scavenger, wherein the acid scavenger is hydrotalcit, and 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168).

Recent progresses in the manufacturing and processing of polymers have led to the application of plastics in virtually every aspect of modern day life. Besides many other applications, polyolefins are used for the preparation of pipes, fittings or storage containers for drinking water distribution systems. In the following disclosure all characteristics and effects supplied to pipes are also supplied to fittings and storage containers, even if not mentioned specifically. To ensure that the drinking water intended for human consumption is of good quality, disinfection is often used. Disinfection means the removal, deactivation or killing of pathogenic microorganisms.

It is known that chlorine is used as disinfectant in water treatment to prevent spread of infectious diseases.

It is also known that most materials, including many polymers such as polyolefins, may be affected by chlorinated water. Results from pressure testing in laboratories and experience from the field have shown that high concentration of chlorine in water can cause early brittle fracture in polyolefin pipes.

An effective alternative disinfectant for drinking water systems is chlorine dioxide, (ClO₂). Chlorine dioxide is a stronger oxidizing agent than chlorine and does not form halogenated by-products. It does not hydrolyze in water but remains in solution as a dissolved gas. Polyolefin resins have shown to have a lower lifetime in chlorine dioxide containing water than in chlorine containing water. Thus, chlorine-resistant polyolefin resins may not be resistant against chlorine dioxide.

Nevertheless, also chlorine dioxide containing water is in permanent contact with the polymeric material. Due to the permanent contact to the inner surface of the polymeric material, deterioration of the polyolefin composition is caused.

It has been found that additives used in polyolefin compositions for pipes known to provide a good resistance to chlorinated water do not necessarily provide satisfactory resistance against chlorine dioxide-containing water. Thus, there is still a need for a more efficient additive, which besides good protection against chlorine containing water, provides also good protection against ClO₂ containing water. Thus allows a longer lifetime of an article, e.g. a pipe, a fitting or a storage container made from a polyolefin composition containing such an additive.

A further important issue as regards the presence of additives in polyolefin compositions is the aim to avoid contamination of media transported e.g. in a pipe made of such a polyolefin composition. This is particularly important in case of a pipe transporting drinking water. Generally speaking, it is preferred to use as low concentrations of additives as possible in order to lower the amount of antioxidant which may possibly be extracted from the pipe into the transported water. Further in this context, it is desirable that the additives used has a low tendency to extraction from the pipe to the transported water.

The admissible amounts of harmful compounds within the drinking water are fixed by legal requirements and even stricter requirements are to be expected with the introduction of the so-called "European acceptance scheme".

Migration behavior of additives, such as stabilizers and modifiers, added to polyolefin-based materials is dependent from a number of different properties such as diffusion rate of the molecules within the polymer matrix, chemical stability of the additives, type of additive decomposition products, etc. To give an example, a specific additive compound might have improved chemical stability, thereby having a beneficial effect on migration behavior. Other less stable additive compounds might, on the other hand, decompose into compounds easily diffusing through the polymer matrix, thereby having a detrimental effect on migration behavior. Furthermore, it has to be taken into account that an improvement in migration behavior must not be obtained on the expense of stabilization of the polymer matrix.

However, to further improve drinking water quality and considering stricter legal requirements to be expected in the near future, it is still highly appreciated to provide polymeric materials of high thermal and chemical stability.

EP 1 911 798 A1 discloses a composition comprising a polyolefin (A); a compound (B) which has a diphosphite structure; c) a phenolic compound (C); and d) optionally, an UV-light stabilizer (D), wherein the total amount of migrated compounds (B), (C) and, if present, (D), as well as their decomposition products are below certain threshold levels in the composition. The composition shows reduced migration of additives into water in contact with composition samples which were leached with unchlorinated water according to EN-12873-1 at room temperature (23 °C).

EP 2 199 330 A1 relates to a polyolefin composition with good resistance to degradation caused by chlorine dioxide-containing water and at the same time showing low migration of the used additives and its decomposition products, especially phenols, out of the composition. The polyolefin composition comprises a polyolefin base resin (A), an antioxidant (B) having a chroman-6-ol structure, an antioxidant (C) having a phenolic structure, wherein the entire molecule does not comprise an ester group, and the concentration of antioxidant (C) in the polyolefin composition is at least 1200 ppm, based on the total composition. The compositions show resistance to ClO₂-containing water at 90 °C according to ASTM F2263-03 and reduced phenolic migration into water according to EN-12873-1 at room temperature (23 °C).

EP 2 014 704 A1 relates to a polyolefin composition wherein the migration of the used additives and its decomposition products, especially phenols, out of the composition is low and thus the composition is particularly suitable for pipe applications, e.g. for drinking water. The polyolefin composition comprises a polyolefin (A), a vitamin E-type stabiliser (B) and a phenolic stabilizer (C) and, optionally, an UV stabilizer (D).

EP 1 911 799 A1 relates to a polyolefin composition with increased resistance to degradation caused by ClO₂ containing water and to a pipe made of such a polyolefin composition, wherein an antioxidant used in the polyolefin composition has a low tendency for extraction by the water transported in a pipe. The polyolefin composition comprises a polyolefin base resin and an antioxidant, wherein said polyolefin composition has a lifetime of at least 200 h in a test measuring the resistance against ClO₂ containing water at 90 °C and at a concentration of ClO₂ of 4 ppm wherein the equipment used is according to ASTM F2263-03.

For pipes degraded by chlorine used as the disinfectant it was observed that the antioxidant was consumed by a direct reaction with chlorine. When chlorine dioxide is used as disinfectant it was found that chlorine dioxide is much more aggressive against the pipe polymer material than chlorine. It was found that the antioxidant is rapidly consumed by chlorine dioxide down to a depth of ca. 1 mm. This leaves the polymer unprotected and an oxidation occurs in a layer that is 50 - 200 µm thick. Due to the stresses in a pipe microcracks will form in the transition from the degraded to the unaffected material and due to the chemical attack in the crack tip the crack will propagate into the material. By the above mechanisms, the time of degradation of polymer materials may be accelerated after the depletion of the antioxidant from the polyolefin composition which should serve as a protection against the attack of the disinfectant in the water with which the polymeric surfaces come into contact.

Hence, there is still a need for improved polyolefin compositions suitable for pipe, fitting or storage applications, particularly for polyolefin compositions having an increased stability in contact with chlorine dioxide containing water.

Thus, it is an object of the present invention to provide an additive for a polyolefin composition useful to manufacture an article, such as a pipe, a fitting or a storage container having an increased resistance against chlorine dioxide, particularly when the polyolefin composition is in permanent contact with chlorine dioxide-containing water.

The present invention is based on the finding that the object of the invention can be achieved by using an acid scavenger, wherein the acid scavenger is hydrotalcit, as additive in combination with 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) as antioxidants .

Therefore, the present invention provides the use as defined in claim 1.

It has been surprisingly found that using an acid scavenger, wherein the acid scavenger is hydrotalcit, in combination with 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168)significantly improves the resistance of polyolefin compositions against chlorine dioxide.

Furthermore, it has been found that the pressure stability of pipes made from the composition is retained, i.e. the pressure stability is not negatively affected by the presence of the acid scavenger, wherein the acid scavenger is hydrotalcit.

As already stated above, additive providing good chlorine resistance do not necessarily also provide good chlorine dioxide resistance. However, the acid scavenger, wherein the acid scavenger is hydrotalcit, used in the present invention provides good resistance against chlorine dioxide containing water. Hence, the disinfectant is chlorine dioxide.

The acid scavenger is hydrotalcit.

As hydrotalcit is a mineral only containing carbon in the form of carbonate, no organic decomposition products in case of a reaction with chlorine dioxide can be formed.

Preferably, the amount of hydrotalcit is at least 0.05 wt.% based on the total weight of the polyolefin composition, more preferably, the amount of hydrotalcit is at least 0.10 wt.% based on the total weight of the polyolefin composition and most preferably, the amount of hydrotalcit is at least 0.15 wt.% based on the total weight of the polyolefin composition.

The hydrotalcit is preferably present in an amount of not more than 1.5 wt.% based on the total weight of the polyolefin composition, more preferably not more than 1.0 wt.% based on the total weight of the polyolefin composition, even more preferably not more than 0.7 wt.% based on the total weight of the polyolefin composition, even more preferably not more than 0.5 wt.% based on the total weight of the polyolefin composition and most preferably not more than 0.3 wt.% based on the total weight of the polyolefin composition.

The hydrotalcit is used in combination with an antioxidant (A2) , which is 1,3,5-Tri-methyl-2,4,6-tris-(3,5-di-tert. butyl-4-hydroxyphenyl) benzene (Irganox 1330).

### Antioxidant B:

Antioxidant (B) is tris (2,4-di-t-butylphenyl) phosphite (Irgafos 168).

The total amount of tris (2,4-di-t-butylphenyl) phosphite (Irgafos 168) in the polyolefin composition is preferably from 0.025 to 0.300 wt.-%, more preferably from 0.050 to 0.225 wt.-%, still more preferably from 0.075 to 0.175 wt.-%, based on the total weight of the composition.

In case antioxidants different from 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) are present, they are usually present in an amount of 0.25 wt.% based on the total weight of the composition.

However, usually and preferably, only antioxidants according to 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) are present in the polyolefin composition.

In case antioxidants not according to 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) are present in the polyolefin composition usually not more than two of such antioxidants are present in the polyolefin composition. In a preferred embodiment only antioxidants according to 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) are used.

The term "base resin" denotes the entirety of polymeric components in the polyolefin composition according to the invention, usually making up at least 90 wt% of the total polyolefin composition.

The favorable effect of the antioxidants according to the present invention is not dependent on the type of polyolefin base resin used. The base resin may therefore be any polyolefin or polyolefin composition.

However, it is preferred that the base resin comprises an olefin polymer comprising at least one olefin having 2 to 8 carbon atoms. At least one ethylene homo- or copolymer or a propylene homo- or copolymer are especially preferred. Preferably, the comonomer is selected from ethylene, propylene and alpha-olefins with 4 to 8 carbon atoms. Still more preferably ethylene, propylene or an alpha-olefin selected from 1-butene, 1-hexene, 4-methyl-1-pentene and 1-octene is used as the comonomer.

The amount of comonomer in the base resin is preferably between 0.1 mol% and 7.0 mol%.

It is particularly preferred that the base resin comprises an ethylene homo- or copolymer or a propylene homo- or copolymer, more preferably the total amount of ethylene homo- or copolymers and propylene homo- or copolymers is at least 80 wt.% of the base resin, even more preferably at least 90 wt.% of the base resin, and most preferably the base resin consists of an ethylene homo- or copolymer or a propylene homo- or copolymer.

In one embodiment of the invention the base resin comprises two or more polyolefins, more preferably polyethylene fractions with different weight average molecular weight. Such resins usually are denoted as multimodal resins.

Polyolefin, in particular polyethylene compositions comprising unimodal or multimodal or crosslinked resins are frequently used e.g. for the production of pipes and fittings due to their favourable physical and chemical properties as e.g. mechanical strength, corrosion resistance and long-term stability. Such compositions are described e.g. in EP 0 739 937 and WO 02/102891. The term molecular weight used herein generally denotes the weight average molecular weight M_{w}.

As mentioned, usually a polyethylene composition comprising at least two polyethylene fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In a preferred embodiment wherein the base resin consists of two polyethylene fractions, the fraction having a lower weight average molecular weight is denoted LMW (low molecular weight fraction), the other is denoted HMW (high molecular weight fraction.

The LMW is preferably is an ethylene homopolymer.

The HMW is preferably is an ethylene copolymer, and preferably comprises at least 0.1 mol% of at least one alpha-olefin comonomer. The amount of comonomer is preferably at most 14 mol%.

In a preferred embodiment wherein the polyolefin composition is a polyethylene composition, the base resin of the polyethylene composition preferably comprises at least 0.1 mol%, more preferably at least 0.3 mol%, and still more preferably at least 0.7 mol% of at least one alpha-olefin comonomer. The amount of comonomer is preferably at most 7.0 mol%, more preferably at most 6.0 mol%, and still more preferably at most 5.0 mol%.

As an alpha-olefin comonomer, preferably an alpha-olefin having from 4 to 8 carbon atoms is used. Still more preferably an alpha-olefin selected from 1-butene, 1-hexene, 4-methyl-1-pentene and 1-octene is used.

The polyolefin base resin preferably has an MFR5 (190 °C, 5 kg) of from 0.01 to 5.0 g/10min, more preferably from 0.1 to 2.0 g/10min, still more preferably from 0.2 to 1.5 g/10min, and most preferably from 0.5 to 1.0 g/10min.

The density of the base resin preferably is from 920 to 960 kg/m³, more preferably is from 930 to 958 kg/m³, and most preferably is from 936 to 955 kg/m³.

In addition to the base resin and the antioxidants, usual additives for utilization with polyolefins, such as pigments (for example carbon black), stabilizers, antistatic agents and utilization agents (such as processing aid agents) may be present in the polyolefin composition.

The amount of such additives usually is 10 wt% or below.

Carbon black is a generally used pigment, which also acts as an UV-absorber. Typically carbon black is used in a final amount of from 0.5 to 5 % by weight, preferably from 1.5 to 3.0 % by weight. Preferably the carbon black is added as a masterbatch, i.e. Carbon black master batch (CBMB) where it is premixed with a polymer, preferably polyethylene , in a specific amount as e.g. shown in the Examples.

The polymerisation catalysts for the production of the base resin include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl₂-based ZN catalyst. The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The composition is preferably produced in a process comprising a compounding step, wherein the base resin which is typically obtained as a powder from the reactor, together with the acid scavenger, wherein the acid scavenger is hydrotalcit, and antioxidants 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) and/or other additives is extruded in an extruder to yield the composition according to the present invention.

Of course, when using the inventive composition, further compounds selected from conventional additives, such as stabilizers, modifiers, fillers, minerals and lubricants may be added for improving processability and surface characteristics thereof.

The use according to the present invention is particularly suitable for pipes, tapes, films, sheets, fittings or storage containers. The use is especially suitable for pipes, fittings or storage containers for drinking water distribution systems comprising the polyolefin composition.

Hence, preferably, the acid scavenger, wherein the acid scavenger is hydrotalcit, in combination with 1,3,5-Tri-methyl-2,4,6-tris-(3,5-di-tert. butyl-4-hydroxyphenyl) benzene (Irganox 1330) and tris (2,4-di-t-butylphenyl) phosphite (Irgafos 168) is used to increase the resistance of pipes, fittings or storage containers for drinking water distribution systems comprising the polyolefin composition as described in the present invention against chlorine dioxide containing water.

The present invention further relates to a method as defined in claim 8.

The acid scavenger, wherein the acid scavenger is hydrotalcit, provides an improved resistance against chlorine dioxide, as can be seen from the results of the reverse bend back test (RBBT) described in detail in the experimental part.

In this test the inner surface of the pipe is observed under a light microscope. The number of cracks and crazes shows the grade of deterioration of the inner surface of the pipe.
Fig. 1 and 2 show the surface of samples of the polyolefin composition prior and after chlorine dioxide treatment.
Fig. 3a shows the form of the 240° sector (specimen) of the pipe prior to the bending for the bend back test (RBBT) described in the experimental section.
Fig. 3b shows the form of the 240° sector (specimen) of the pipe after the bending for the bend back test (RBBT) described in the experimental section.

The invention will now be described by the following non-limiting examples.

### Examples

### Measurement methods

### Chlorine dioxide resistance

The compositions to be tested are formed into pipes having an outer diameter of 25 mm, a wall thickness of 2.3 mm and a length of 1 meter by a Battenfeld extruder for PE materials.

The extrusion condensations were as follows. Melt temperature: 213°C, torque 42-45%, screw speed 27 rpm, output 19 kg/h.

The following temperature profile was applied for pipe extrusion:

| | **Inlet** | **Cylinder** | | | **Pipe Head** | | | | | **Die** |
|---|---|---|---|---|---|---|---|---|---|---|
| Zone | 0 | 1 | 2 | 3 | 1 | 2 | 3 | 4 | 5 | 6 |
| [°C] | 49 | 175 | 180 | 185 | 195 | 195 | 195 | 195 | 195 | 195 |

The pipes are subjected to water containing chlorine dioxide in a concentration of 1 mg/l +/- 0.05 at a pressure of 0.6 MPa and a temperature of 40 °C. The flow rate of the water was 200 liter/hour. The chlorine dioxide concentration was monitored and controlled during the measurement.

### Reverse bend back test (RBBT)

In this test pipes samples subjected for 270 days to the above chlorine dioxide test were subjected to the following procedure:
The Reverse Bend Back Test is a pipe characterisation method which was designed for detecting on field the degradation status on pipes in service. It was recently developed, according to the guideline from the standard ASTM D 2513 in order to get more information regarding the degradation status of pipes from the semi-pipe testing program.

The specimen is prepared as follows.

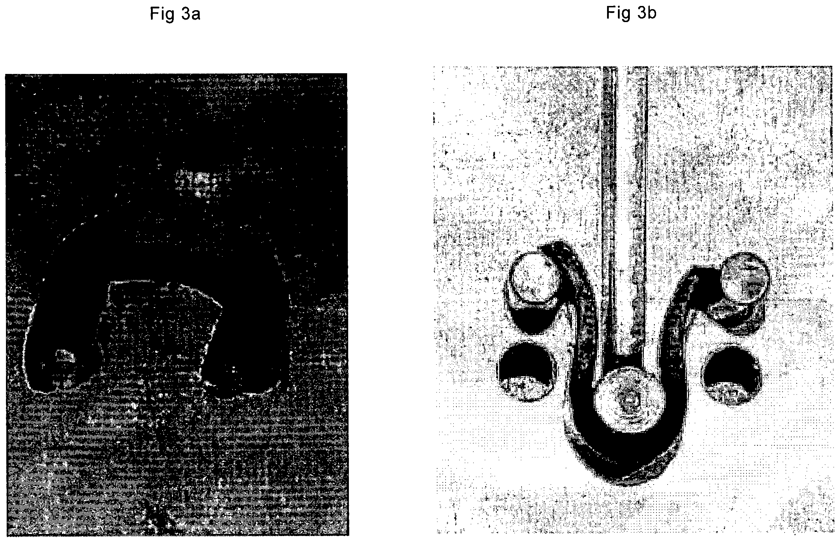

A ring having a length of 20 mm is cut from the pipe perpendicular to the flow direction. A 240° sector is then cut from the resulting ring. This 240° sector is then deformed to turn the inside out. The form of the specimen prior to and after the bending is depicted in figure 3.

The inner surface of the pipe (marked with an arrow in figure 3) is observed under a light microscopy. The morphology of the bended inner surface supplies information on how severe or not the degradation is.

### Density

Density is measured according to ISO 1183-1:2004 (method A) on compression moulded specimen prepared according to EN ISO 1872-2 (February 2007) and is given in kg/m³.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and determined at a loading of 5.00 kg (MFR₅).

### Pressure test: control point (ISO 1167)

The pressure test on un-notched 25 mm x 2.3 mm pipes having a length of 350 mm is carried out in water-inside and water-outside environment. End caps were used. Control time is determined in hours. A hoop stress of 4.0 MPa and a temperature of 80 °C were applied. It is subjected to check whether the developed materials pass the control point in pressure pipe testing.

The minimum pipe wall thickness is measured according to ISO3126.

### Used polymer

PE resin used for compounding has a bulk density of 951 kg/m³ with an MFR₅ (ISO 1133, 190°C, 5.0 kg) of 0.85 g/10 min.

| | |
|---|---|
| Irganox 1010 | Pentaerythrityl-tetrakis(3-(3',5'-di-tert. butyl-4-hydroxyphenyl)propionate) |
| Irganox 1330 | 1,3,5-tri-methyl-2,4,6-tris-(3,5-di-tert. butyl-4-hydroxyphenyl)benzene |
| Irgafos | 168 Tris(2,4-di-tert. butylphenyl)phosphite |
| Irganox | E201 2,5,7,8-Tetrametyl-2-(4',8',12'-trimethyltridecyl)-chroman-6-ol (Vitamin E) |
| Ca stearate | obtained by Faci. |

carbon black masterbatch (CBMB):
A masterbatch containing 39.5 wt.% carbon black (Elftex TP, distributed by Cabot) and 60.4 wt.% of an ethylene-butylene copolymer having a comonomer content of 1.7 wt.%, an MFR₂ (2.16 kg, 190°C, ISO 1133) of 30 g/10 min and a density of 959 kg/m³ has been used.

| | |
|---|---|
| hydrotalcit: | Pural MG63HT obtained from Sasol |

### Compounding

Compositions having the content as indicated in table 1 below were prepared by a co-rotating twin screw extruder Coperion ZSK40 (L/D 43). The screw speed can be set between 150-200 rpm, torque 80 - 85% and throughput rate ∼50 - 55 kg/h. Temperature profile was set at 190-200°C."

**Table 1**

| | **CE1** | **CE2** | **IE3** | **IE4** |
|---|---|---|---|---|
| PE resin | 93.88 | 93.635 | 93.350 | 93.435 |
| Irganox 1010 | 0.11 | 0.32 | | 0.32 |
| Irganox. 1330 | | | 0.32 | |
| Irgafos 168 | 0.11 | | 0.11 | |
| Irganox E201 | | 0.025 | | 0.025 |
| Ca-Stearate | 0.15 | 0.15 | 0.15 | 0.15 |
| CBMB | 5.75 | 5.75 | 5.75 | 5.75 |
| Hydrotalcit | | | 0.200 | 0.200 |

| | | | | |
|---|---|---|---|---|
| CE: comparative example; IE3: inventive example; IE4: reference example | | | | |

The materials have been subjected to the above described test for chlorine dioxide resistance. The results are shown in table 2.

**Table 2**

| Material | Time to failure (days) |
|---|---|
| CE1 | 324 |
| CE2 | 346 |
| IE3 | > 580 (test still running) |
| IE4 | 408 |

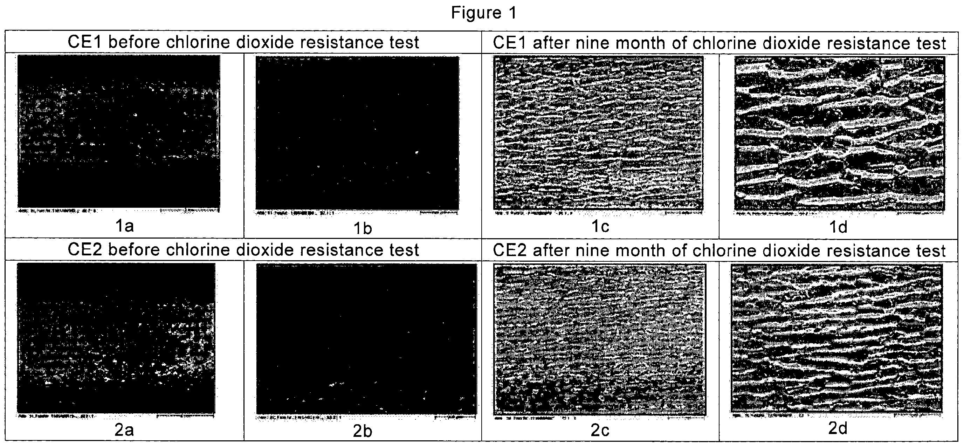

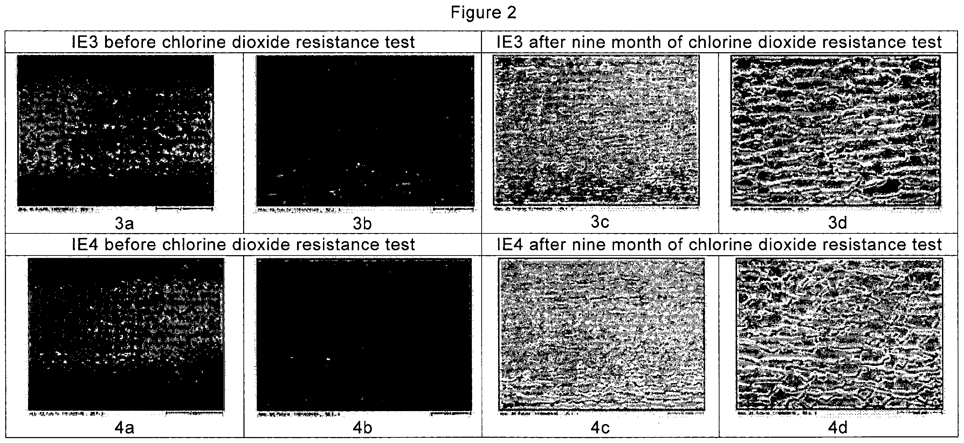

Two samples of each pipe have been subjected to the reverse bend back test (RBBT) as described above. The results are shown in figures 1 and 2. 1a and 1b show the two pipe samples of comparative example 1 prior to the chlorine dioxide test and 1c and 1d show the two samples 1a and 1b, respectively after 270 days of the test.

2a and 2b show the two pipe samples of comparative example 2 prior to the chlorine dioxide test and 2c and 2d show the two samples 2a and 2b, respectively after 270 days of the test.

3a and 3b show the two pipe samples of inventive example 3 prior to the chlorine dioxide test and 3c and 3d show the two samples 3a and 3b, respectively after 270 days of the test.

4a and 4b show the two pipe samples of reference example 4 prior to the chlorine dioxide test and 4c and 4d show the two samples 4a and 4b, respectively after 270 days of the test.

As can be seen from the figures no cracks or crazes were present on the inner surfaces of the pipes prior to exposure to chlorine dioxide containing water.

Furthermore, as can be seen when comparing figures 1c/1d with 3c/3d and 2c/2d with 4c/4d the stability using the inventive stabilizer is significantly improved.

Furthermore, two pipes of each of the above examples having an outside diameter of 24.9 mm have been subjected to pressure testing according to ISO1167 as described above at a temperature of 80 °C and a hoop stress of 4 MPa. The measurement was stopped at the test time given in table 3 whereby no failure was observed.

The results from pressure pipe testing show that the pressure resistance is not affected by adding the acid scavenger to the PE materials

**Table 3**

| | Hoop stress (MPa) | Average Test time without failure (hours) |
|---|---|---|
| CE1 | 4.0 | 5423 |
| CE2 | 4.0 | 5619 |
| IE3 | 4.0 | 5545 |
| IE4 | 4.0 | 5607 |

## Claims

1. Use of an acid scavenger, wherein the acid scavenger is hydrotalcit, to increase the resistance of a polyolefin composition against chlorine dioxide containing water
wherein the acid scavenger is used in combination with 1,3,5-Tri-methyl-2,4,6-tris-(3,5-di-tert. butyl-4-hydroxyphenyl) benzene (Irganox 1330) (A2)
and tris (2,4-di-t-butylphenyl) phosphite (Irgafos 168) (B) .

2. The use according to any one of the preceding claims, wherein the amount of acid scavenger is 0.05 to 1.5 wt.% of the polyolefin composition.

3. The use according to any one of the preceding claims, wherein the entirety of polymeric components in the polyolefin composition ("base resin") is making up at least 90 wt% of the total polyolefin composition.

4. The use according to claim 3, wherein the base resin comprises an ethylene homo- or copolymer or a propylene homo- or copolymer.

5. The use according to any one of the preceding claims 3 or 4, wherein total amount of ethylene homo- or copolymers and propylene homo- or copolymers is at least 80 wt.% of the base resin.

6. The use according to any one of the preceding claims, wherein the polyolefin composition is in form of an article, such as a pipe, a fitting, a tape, a film, a sheet or a container.

7. The use according to claim 6 wherein the article is a pipe.

8. Method for transporting water containing chlorine dioxide comprising the step of conveying the water through a pipe comprising a polyolefin composition, the polyolefin composition comprising an acid scavenger, wherein the acid scavenger is hydrotalcit,
wherein the acid scavenger is used in combination with 1,3,5-Tri-methyl-2,4,6-tris-(3,5-di-tert. butyl-4-hydroxyphenyl) benzene (Irganox 1330) (A2)
and tris (2,4-di-t-butylphenyl) phosphite (Irgafos 168) (B).

## Patentansprüche

1. Verwendung eines Säurefängers, wobei der Säurefänger Hydrotalkit ist, um die Beständigkeit einer Polyolefinzusammensetzung gegen chlordioxidhaltigem Wasser zu erhöhen,
wobei der Säurefänger in Kombination verwendet wird mit 1,3,5-Tri-Methyl-2,4,6-tris-(3,5-di-tert-butyl-4-hydroxyphenyl) Benzol (Irganox 1330) (A2)
und Tris(2,4-di-t-butylphenyl)phosphit (Irgafos 168) (B).

2. Verwendung nach einem der vorhergehenden Ansprüche, wobei die Menge des Säurefängers 0,05 bis 1,5 Gew.-% der Polyolefinzusammensetzung beträgt.

3. Verwendung nach einem der vorhergehenden Ansprüche, wobei die Gesamtheit der Polymerkomponenten in der Polyolefinzusammensetzung ("Basisharz") mindestens 90 Gew.-% der gesamten Polyolefinzusammensetzung ausmacht.

4. Verwendung nach Anspruch 3, wobei das Basisharz ein Ethylenhomo- oder -copolymer oder ein Propylenhomo- oder -copolymer umfasst.

5. Verwendung nach einem der vorhergehenden Ansprüche 3 oder 4, wobei die Gesamtmenge an Ethylenhomo- oder -copolymeren und Propylenhomo- oder -copolymeren mindestens 80 Gew.-% des Basisharzes beträgt.

6. Verwendung nach einem der vorhergehenden Ansprüche, wobei die Polyolefinzusammensetzung in Form eines Artikels vorliegt, wie eines Rohrs, eines Anschlussstücks, eines Bandes, einer Folie, einer Platte oder eines Behälters.

7. Verwendung nach Anspruch 7, wobei der Artikel ein Rohr ist.

8. Verfahren zum Transportieren von Wasser, das Chlordioxid enthält, umfassend den Schritt des Beförderns des Wassers durch ein Rohr, das eine Polyolefinzusammensetzung umfasst, wobei die Polyolefinzusammensetzung einen Säurefänger umfasst, wobei der Säurefänger Hydrotalkit ist,
wobei der Säurefänger in Kombination verwendet wird mit:
1,3,5-Tri-Methyl-2,4,6-tris-(3,5-di-tert-butyl-4-hydroxyphenyl) Benzol (Irganox 1330) (A2)
und Tris(2,4-di-t-butylphenyl)phosphit (Irgafos 168) (B).

## Revendications

1. Utilisation d'un piégeur d'acide, dans laquelle le piégeur d'acide est une hydrotalcite, pour augmenter la résistance d'une composition de polyoléfine à de l'eau contenant du dioxyde de chlore, dans laquelle le piégeur d'acide est utilisé en combinaison avec du 1,3,5-triméthyl-2,4,6-tris-(3,5-di-tert-butyl-4-hydroxyphényl)benzène (Irganox 1330) (A2) et du phosphite de tris(2,4-di-t-butylphényle) (Irgafos 168) (B).

2. Utilisation selon l'une quelconque des revendications précédentes, dans laquelle la quantité du piégeur d'acide est de 0,05 à 1,5 % en poids de la composition de polyoléfine.

3. Utilisation selon l'une quelconque des revendications précédentes, dans laquelle la totalité des composants polymères dans la composition de polyoléfine ("résine de base") constitue au moins 90 % en poids de la composition de polyoléfine totale.

4. Utilisation selon la revendication 3, dans laquelle la résine de base comprend un homo- ou copolymère d'éthylène ou un homo- ou copolymère de propylène.

5. Utilisation selon l'une quelconque des revendications 3 et 4, dans laquelle la quantité totale des homo- ou copolymères d'éthylène et des homo- ou copolymères de propylène est d'au moins 80 % en poids de la résine de base.

6. Utilisation selon l'une quelconque des revendications précédentes, dans laquelle la composition de polyoléfine est sous la forme d'un article, tel qu'un tuyau, un raccord, une bande, un film, une feuille ou un récipient.

7. Utilisation selon la revendication 6, dans laquelle l'article est un tuyau.

8. Procédé pour transporter de l'eau contenant du dioxyde de chlore, comprenant l'étape de convoyage de l'eau à travers un tuyau comprenant une composition de polyoléfine, la composition de polyoléfine comprenant un piégeur d'acide, dans lequel le piégeur d'acide est une hydrotalcite, dans lequel le piégeur d'acide est utilisé en combinaison avec du 1,3,5-triméthyl-2,4,6-tris-(3,5-di-tert-butyl-4-hydroxyphényl)benzène (Irganox 1330) (A2) et du phosphite de tris(2,4-di-t-butylphényle) (Irgafos 168) (B).
